(19) Europäisches Patentamt

European Patent Office

Office européen des brevets

(11) **EP 1 156 307 A1**

(12) **DEMANDE DE BREVET EUROPEEN**

(43) Date de publication:
**21.11.2001 Bulletin 2001/47**

(51) Int Cl.⁷: **G01F 25/00**, G01F 1/74,
G01F 1/88, F23K 3/02

(21) Numéro de dépôt: 00401340.5

(22) Date de dépôt: **16.05.2000**

(84) Etats contractants désignés:
**AT BE CH CY DE DK ES FI FR GB GR IE IT LI LU
MC NL PT SE**
Etats d'extension désignés:
**AL LT LV MK RO SI**

(71) Demandeur: **ENTREPRISE GENERALE
DE CHAUFFAGE INDUSTRIEL PILLARD
13272 Marseille Cédex 08 (FR)**

(72) Inventeur: **Russo, Luigi
13006 Marseille (FR)**

(74) Mandataire: **de Roquemaurel, Bruno et al
Novamark Technologies
122, rue Edouard Vaillant
92593 Levallois Perret Cedex (FR)**

(54) **Procédé d'étalonnage de mesure du débit massique d'une matière en vrac**

(57) Ce procédé comprend les étapes de détermination (24, 26) en continu de la perte de charge ($\Delta P$) et de la température (T) de l'air dans la conduite de transport, une première valeur ($Q_1$) de débit massique étant déduite (27) de ces mesures, de détermination (25) en continu du débit volumique ($Q_v$) de la matière, une seconde valeur ($Q_2$) de débit massique étant déduite (28) du débit volumique, en tenant compte de la masse volumique ($\rho$) de la matière, de comparaison (29) de la première et de la seconde valeur ($Q_1, Q_2$) de débit massique ainsi déterminées, et si une différence de mesure est détectée (30), une étape de calibration (32) de manière à déterminer une nouvelle valeur de la masse volumique de la matière ($\rho$) et un paramètre (a) de calcul du débit massique en fonction de la perte de charge ($\Delta P$).

FIG. 2

## Description

La présente invention concerne un procédé de mesure de débit massique d'une matière circulant dans une conduite de transport pneumatique.

Elle s'applique notamment, mais non exclusivement à l'alimentation en combustible d'un brûleur industriel, ce combustible se présentant généralement sous une forme solide pulvérisée et étant transmis jusqu'au brûleur dans une conduite en présence d'air de transport.

Il s'avère que la qualité de la combustion réalisée dans le brûleur est très liée au débit massique du combustible arrivant dans le brûleur. En effet, si le combustible n'arrive pas dans le brûleur avec un débit massique constant, on observe des fluctuations au niveau de la flamme du brûleur et dans les gaz de combustion révélant que la combustion n'est pas complètement réalisée. Il en résulte notamment la formation de gaz polluants tels que du monoxyde de carbone, ainsi qu'une baisse du rendement du brûleur.

Or, la seule méthode connue dans ce type d'installation pour mesurer directement le débit massique du combustible arrivant dans le brûleur consiste à vider un volume, par exemple une trémie, rempli de matière et de mesurer la vitesse à laquelle le volume se vide. La pente de la courbe de perte en poids du volume donne le débit massique de matière qui sort du volume. Cette méthode n'est toutefois valable que s'il n'y a pas de matière qui entre dans la trémie. Elle nécessite donc l'arrêt de l'alimentation de la trémie. Par conséquent, elle ne peut pas être utilisée pour obtenir une mesure en continu du débit massique qui est de plus très perturbé à chaque remplissage.

Il existe par ailleurs des méthodes de mesure indirectes du débit massique. On peut par exemple mesurer l'énergie nécessaire pour mettre en mouvement la matière, c'est-à-dire la perte de charge dans la conduite de transport, sachant que le débit massique peut être évalué en fonction de la perte de charge et de la température de l'air de transport dans la conduite. La perte de charge peut notamment être obtenue en mesurant la pression du mélange air combustible en deux points distincts le long de la conduite de transport, par exemple à l'entrée et à la sortie de la conduite.

Cette mesure donne donc une image indirecte du débit massique et peut être effectuée en continu.

Toutefois, la mesure de la perte de charge est perturbée par certains autres paramètres comme le débit d'air dans la conduite de transport, ou par d'éventuels dépôts de matière dans la ligne de transport, ce qui entraîne une dérive de la valeur de débit massique ainsi obtenue.

Le débit massique peut également être obtenu en continu à partir du débit volumique du combustible, celui-ci étant calculé à partir des caractéristiques géométriques et de la vitesse de rotation d'une vis de convoyeur ou d'un sas d'extraction qui envoie le combustible dans la conduite de transport. Le débit massique peut ensuite être déduit de la valeur de débit volumique et de la masse volumique apparente du combustible qui passe dans la vis sans fin du convoyeur ou du sas d'extraction.

Toutefois, comme le combustible se présente sous forme solide, pulvérisé, sa masse volumique apparente peut varier, notamment en fonction de la teneur du combustible en cendres, de la qualité du broyage et de l'efficacité du remplissage du convoyeur à vis. Dans ce cas, la valeur du débit massique ainsi obtenue est erronée.

La présente invention a pour but de supprimer ces inconvénients. A cet effet, elle propose un procédé fiable de mesure en continu du débit massique d'une matière solide, pulvérisée, circulant en présence d'air dans une conduite de transport pneumatique.

Selon l'invention, ce procédé est caractérisé en ce qu'il comprend les étapes suivantes :

- la détermination en continu de la perte de charge $\Delta P$ et de la température T de l'air dans la conduite, une première valeur de débit massique étant déduite de ces mesures,

- la détermination en continu du débit volumique de la matière, une seconde valeur de débit massique étant déduite de cette mesure, en tenant compte de la masse volumique apparente de la matière,

- la comparaison de la première et de la seconde valeur de débit massique ainsi déterminées, et si une différence de mesure est détectée, la réalisation d'une opération de calibration du débit massique de manière à déterminer la masse volumique apparente de la matière et un paramètre de calcul du débit massique en fonction de la perte de charge.

Ainsi, le procédé selon l'invention combine trois méthodes distinctes de détermination du débit massique de manière à éliminer tous les défauts de précision et de stabilité que chaque méthode présente séparément.

Le débit massique obtenu à partir de la mesure de la perte de charge présente une bonne précision. Par contre, une telle précision ne peut pas être obtenue à partir de la détermination du débit volumique, mais cette mesure permet de détecter en temps réel d'éventuelles dérives à long terme dans la relation entre la perte de charge et le débit massique. Cette seconde méthode est donc mise à profit pour déterminer à quels instants précis il est nécessaire d'effectuer une calibration des mesures.

Cet aspect de l'invention est essentiel, car les opérations de calibration nécessitent le blocage du flux de matière en amont de la conduite de transport et donc perturbent le débit de matière à la sortie de la conduite. Le procédé selon l'invention permet donc de déclencher les opérations de calibration uniquement lorsqu'elles sont nécessaires, ce qui réduit au minimum les perturbations du débit de matière.

De cette manière, si par exemple un bouchage partiel ou une fuite dans la ligne de transport se produit, la perte de charge de la ligne augmente et par conséquent, le débit massique calculé est plus élevé qu'en réalité. En parallèle, le débit massique déterminé à partir du débit volumique continue à fournir une valeur proche de la valeur réelle. La détection de l'écart entre ces deux valeurs de débit massique déclenche une calibration qui permet de déterminer un paramètre entrant dans la relation entre la perte de charge et le débit massique, dont la valeur tient compte du bouchage partiel de la conduite de transport.

On peut prévoir de déclencher une alarme lorsque l'écart entre les deux valeurs de débit massique obtenues est supérieur à un seuil, révélant la présence d'un bouchage partiel dans la conduite de transport.

L'invention concerne également l'application du procédé de mesure de débit massique à l'alimentation d'un brûleur de combustible solide pulvérisé, le combustible étant introduit dans une trémie de pesée dont le poids est mesuré en permanence, le combustible étant extrait de la trémie à une certaine vitesse d'extraction et ensuite injecté avec de l'air sous pression dans une conduite de transport en direction du brûleur, la vitesse d'extraction étant commandée de manière à obtenir un débit massique constant à la sortie de la conduite de transport.

Un mode de réalisation préféré d'un dispositif mettant en oeuvre le procédé selon l'invention sera décrit ci-après, à titre d'exemple non limitatif, avec référence aux dessins annexés dans lesquels :

La figure 1 représente schématiquement un dispositif d'alimentation d'un brûleur industriel auquel le procédé selon l'invention est appliqué ;

La figure 2 représente sous la forme d'un organigramme les différentes étapes du procédé selon l'invention.

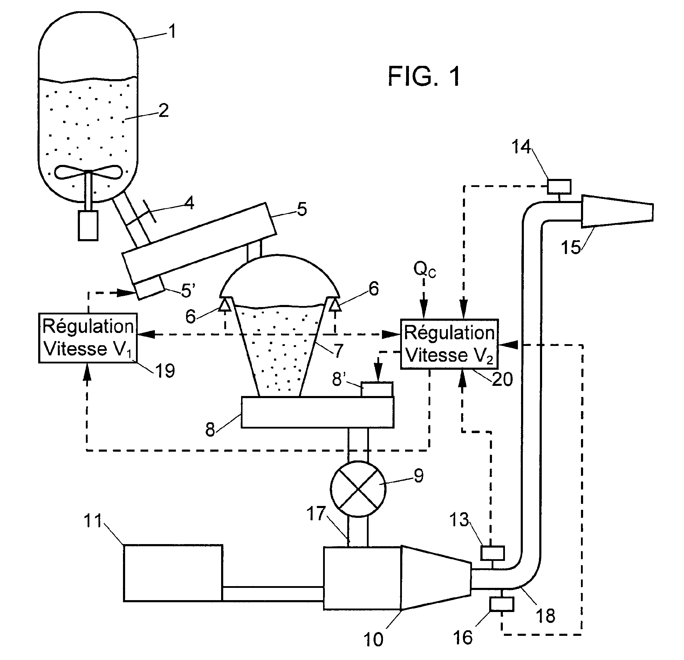

La figure 1 représente un dispositif d'alimentation d'un brûleur industriel auquel le procédé selon l'invention peut s'appliquer. Ce dispositif comprend un silo 1 dans lequel est stocké sous une forme solide et pulvérisée du combustible 2 destiné à alimenter le brûleur. Ce combustible qui est par exemple constitué de charbon pulvérisé, est brassé au moyen d'un agitateur 3 de manière à empêcher la formation d'agglomérats. Le silo 1 débouche par l'intermédiaire d'une vanne de fermeture 4, dans un premier convoyeur à vis 5 dont la vis est entraînée à une vitesse $V_1$ par un moteur 5'. Ce convoyeur alimente en combustible une trémie de pesée 7 dont le poids est mesuré en continu par un dispositif de pesée 6. Le combustible se trouvant dans la trémie 7 tombe dans un second convoyeur à vis 8 dont la vis est entraînée à la vitesse $V_2$ par un moteur 8'. Ce convoyeur transporte le combustible en direction d'une conduite 17 qui débouche à l'entrée d'un éjecteur pneumatique 10. Parallèlement, un compresseur 11 produit de l'air sous pression qui est envoyé avec le combustible pulvérisé dans l'éjecteur 10 à l'entrée d'une conduite de transport pneumatique 18. Cette conduite alimente en combustible le brûleur 15, par exemple conçu comme moyen de chauffage pour un four de cimenterie.

Pour empêcher que l'air sous pression remonte dans le convoyeur 8, un sas rotatif 9 est interposé sur la conduite 17.

La pression dans la conduite de transport 18 est mesurée en permanence par des capteurs de pression 13 et 14, en deux points distincts le long de la conduite, par exemple à l'entrée et à la sortie de celle-ci. Un capteur de température 16, par exemple du type thermocouple, fournit également en permanence la température de l'air injecté dans la conduite de transport 18.

La vitesse de rotation du moteur 5' du convoyeur 5 est commandée par un dispositif de régulation 19 conçu pour réguler la vitesse $V_1$ de la vis du convoyeur 5 de manière à maintenir constant le poids du combustible dans la trémie 7. A cet effet, ce dispositif de régulation 19 reçoit en entrée le poids de la trémie, mesuré en continu par le dispositif de pesée 6.

Par ailleurs, la vitesse de rotation $V_2$ du moteur 8' du convoyeur à vis 8 est également commandée par un autre dispositif de régulation 20 permettant d'obtenir selon l'invention une valeur fiable du débit massique au niveau du brûleur 15, et de réguler cette vitesse de manière à maintenir le débit massique sensiblement constant.

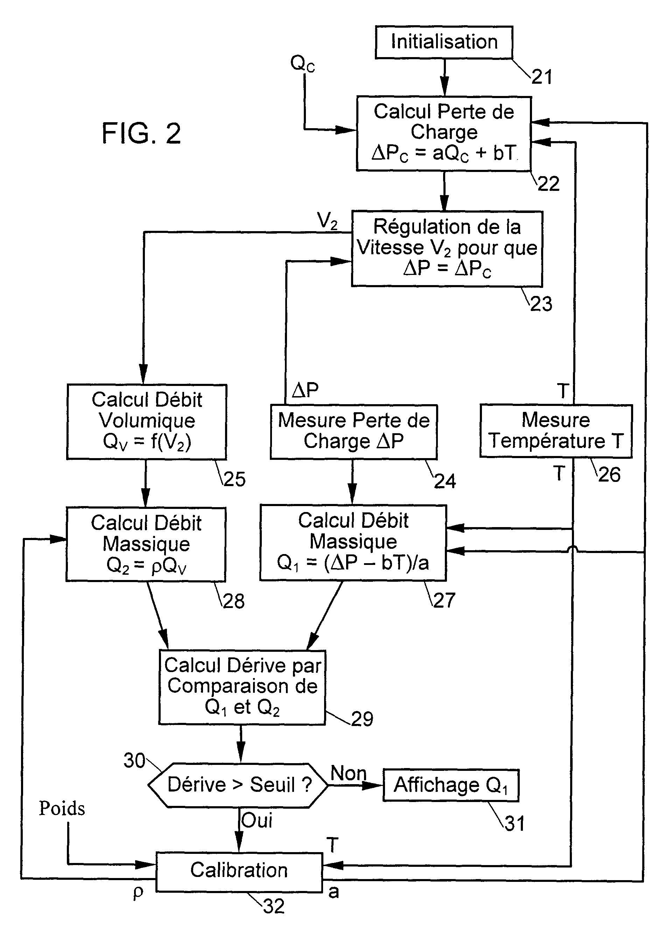

Le dispositif de régulation 20 est conçu selon l'invention pour fonctionner de la manière illustrée sur la figure 2.

Sur cette figure, le procédé selon l'invention comprend tout d'abord une étape d'initialisation 21 effectuée au démarrage de l'installation, au cours de laquelle, on introduit une valeur de consigne de débit massique $Q_C$ dont la valeur est déterminée en fonction notamment de la température souhaitée au niveau du brûleur.

Au cours de cette étape, on prélève la température mesurée en continu par le capteur 16 à l'étape 26, et on effectue également une mesure de la perte de charge $\Delta P_0 = P_{13} - P_{14}$ dans la conduite de transport 18 lorsque le débit de matière est nul, en prélevant les pressions $P_{13}$ et $P_{14}$ fournies en continu respectivement par les capteurs 13 et 14 (étape 24). Ces mesures permettent de calculer le coefficient $b = \Delta P_0/T$ qui sera utilisé par la suite pour calculer le débit massique en fonction de la perte de charge, et réciproquement.

On effectue ensuite une mesure de calibration en remplissant la trémie 7, puis en la vidant pour effectuer une mesure de perte en poids décrite ci-après, afin de déterminer un paramètre et la masse volumique du combustible dans le convoyeur 8.

A l'étape 22 suivante, on détermine la perte de

charge $\Delta P_C$ correspondant au débit massique de consigne $Q_C$ en appliquant la formule suivante :

$$\Delta P_C = a \cdot Q_C + \frac{b}{T} \qquad (1)$$

a et b étant des paramètres calculés au cours d'une étape de calibration effectuée précédemment ou lors du démarrage de l'installation, et T la valeur de la température qui est mesurée en continu par le capteur 16 à l'étape 26.

Cette valeur de perte de charge $\Delta P_C$ est utilisée par la suite à l'étape 23 comme valeur de consigne pour réguler la vitesse de rotation $V_2$ de la vis du convoyeur 8 de manière à ce que la perte de charge mesurée reste constante et égale à la valeur de consigne $\Delta P_C$. Cette régulation est effectuée en permanence, en comparant la perte de charge $\Delta P$ mesurée en continu à l'étape 24 avec la perte de charge de consigne $\Delta P_C$.

Par ailleurs, les étapes suivantes du procédé selon l'invention permettent d'évaluer de manière fiable le débit massique du combustible à l'entrée du brûleur 15.

A l'étape 27, une première valeur $Q_1$ de débit massique est calculée en fonction de la perte de charge mesurée à l'étape 24 en appliquant la formule suivante :

$$Q_1 = \frac{\Delta P - bT}{a} \qquad (2)$$

En parallèle aux étapes 25 et 28, on calcule le débit volumique $Q_V$ en fonction de la vitesse $V_2$ de la vis du convoyeur et des caractéristiques géométriques de ce dernier, une seconde valeur $Q_2$ de débit massique étant déduite de la valeur du débit volumique $Q_V$ en multipliant celle-ci par la masse volumique $\rho$ du combustible déterminée lors de la dernière calibration.

A l'étape 29 suivante, les valeurs $Q_1$ et $Q_2$ sont comparées, par exemple en calculant une valeur d'erreur de mesure, et si cette erreur est inférieure à une valeur de seuil prédéterminé, par exemple 2% (étape 30), la valeur de débit massique $Q_1$ est affichée à l'étape 31 sur un dispositif d'affichage (non représenté). Dans le cas contraire, on effectue une opération de calibration pour déterminer à nouveau le paramètre a et la masse volumique $\rho$ (étape 32). A cet effet, le dispositif de régulation 20 commande l'arrêt du moteur 5' pour stopper le remplissage de la trémie 7.

L'opération de calibration permet de déterminer la masse volumique $\rho$ et le paramètre a. Cette opération consiste à arrêter le convoyeur 5 pour arrêter le remplissage de la trémie 7 et à lancer une opération de perte en poids consistant à commander la vitesse $V_2$ de la vis du convoyeur 8 de manière à maintenir la perte de charge $\Delta P$ constante, pendant que l'on détermine le débit massique réel $Q_m$ du combustible dans le convoyeur 8 en mesurant la variation de poids de la trémie 7 en fonction du temps. Ces données permettent de déterminer le paramètre a par la formule suivante :

$$a = \frac{\Delta P_m - bT}{Q_m} \qquad (3)$$

La valeur $Q_m$ du débit massique mesuré permet également de déterminer la masse volumique du combustible dans le convoyeur 8 en supposant que la masse volumique et le débit massique varient dans les mêmes proportions. Ainsi, la nouvelle valeur de la masse volumique $\rho_n$ du combustible peut être obtenu par la formule suivante :

$$\rho_n = \rho_{n-1} \frac{Q_m}{Q_2} \qquad (4)$$

$\rho_{n-1}$ étant la valeur précédente de la masse volumique.

A la fin de l'étape de calibration, on remet en action le moteur 5' de manière à remplir à nouveau la trémie 7.

A l'étape 30, on peut prévoir de comparer la dérive entre les deux calculs de débit massique à un second seuil supérieur au premier, un dépassement de ce second seuil déclenchant une alarme indiquant un bouchage partiel dans la conduite de transport 18.

## Revendications

1. Procédé de mesure en continu du débit massique d'une matière solide, pulvérisée, circulant en présence d'air dans une conduite de transport pneumatique,
   **caractérisé en ce qu'**il comprend les étapes suivantes :

   - la détermination (24, 26) en continu de la perte de charge ($\Delta P$) et de la température (T) de l'air dans la conduite (18), une première valeur ($Q_1$) de débit massique étant déduite (27) de ces mesures,
   - la détermination (25) en continu du débit volumique ($Q_v$) de la matière, une seconde valeur ($Q_2$) de débit massique étant déduite (28) du débit volumique, en tenant compte de la masse volumique ($\rho$) de la matière,
   - la comparaison (29) de la première et de la seconde valeur ($Q_1, Q_2$) de débit massique ainsi déterminées, et si une différence de mesure est détectée (30), la réalisation (32) d'une opération de calibration du débit massique de manière à déterminer une nouvelle valeur de la masse volumique de la matière ($\rho$) et un paramètre (a) de calcul du débit massique en fonction de la perte de charge ($\Delta P$).

**2.** Procédé de mesure selon la revendication 1, **caractérisé en ce qu'**il comprend la comparaison de l'erreur de mesure à un seuil d'erreur révélant un bouchage ou une fuite dans la conduite de transport, et le déclenchement d'un signal d'alarme si l'erreur de mesure est supérieure à ce seuil.

**3.** Procédé de mesure selon la revendication 1 ou 2, **caractérisé en ce que** la première valeur ($Q_1$) de débit massique est obtenue à l'aide de la formule suivante :

$$Q_1 = \frac{\Delta P - bT}{a}$$

dans laquelle a est un paramètre déterminé à chaque calibration et b est une constante déterminée au démarrage de l'installation.

**4.** Procédé de mesure selon la revendication 3, **caractérisé en ce que** l'opération de calibration consiste à vider un volume prédéterminé rempli de matière, à déterminer le débit massique apparent ($Q_m$) de la matière en sortie du volume à partir de la variation de poids du volume en fonction du temps, la vitesse d'extraction de la matière du volume étant régulée de manière à maintenir constante la perte de charge ($\Delta P$) dans la conduite, à déterminer la masse volumique ($\rho$) de la matière, et à déterminer le paramètre (a) en fonction du débit massique, de la perte de charge et de la température, mesurés.

**5.** Procédé de mesure selon la revendication 4, **caractérisé en ce que** la valeur de la masse volumique obtenue lors d'une opération de calibration est déterminée à partir de la valeur précédente de la masse volumique et du rapport du débit massique apparent ($Q_m$) et du débit massique ($Q_2$) calculé précédemment.

**6.** Procédé de régulation du débit massique d'un combustible solide pulvérisé alimentant un brûleur (15), le combustible (2) étant introduit dans une trémie de pesée (7) dont le poids est mesuré en permanence, le combustible étant extrait de la trémie à une certaine vitesse d'extraction par un organe d'extraction (8) et ensuite injecté avec de l'air sous pression dans une conduite de transport (18) en direction du brûleur, la vitesse d'extraction étant commandée de manière à obtenir un débit massique constant à la sortie de la conduite de transport, **caractérisé en ce que** pour réguler la vitesse de la vis du convoyeur, le débit massique de la conduite de transport est déterminé par les opérations suivantes :

- la détermination (24, 26) en continu de la perte

de charge ($\Delta P$) et de la température (T) de l'air dans la conduite (18), une première valeur ($Q_1$) de débit massique étant déduite (27) de ces mesures,

- la détermination (25) en continu du débit volumique ($Q_v$) de la matière en fonction de la vitesse d'extraction du combustible de la trémie, une seconde valeur ($Q_2$) de débit massique étant déduite (28) du débit volumique, en tenant compte de la masse volumique ($\rho$) de la matière,

- la comparaison (29) de la première et de la seconde valeur ($Q_1,Q_2$) de débit massique ainsi déterminées, et si une différence de mesure est détectée (30), la réalisation (32) d'une opération de calibration du débit massique de manière à déterminer une nouvelle valeur de la masse volumique de la matière ($\rho$) et un paramètre (a) de calcul du débit massique en fonction de la perte de charge ($\Delta P$).

**7.** Procédé de régulation selon la revendication 6, **caractérisé en ce que** le combustible est extrait de la trémie (7) en tombant dans un convoyeur à vis (8) dont la vis tourne à une vitesse ($V_2$), le débit volumique ($Q_v$) étant déterminé à partir de la vitesse de la vis du convoyeur (8) et des caractéristiques géométriques de celui-ci.

**8.** Procédé de régulation selon la revendication 7, **caractérisé en ce que** pendant l'opération de calibration, la trémie de pesée ne reçoit plus de combustible, le débit massique (Q) du combustible étant alors déterminé en fonction de la vitesse à laquelle la trémie de pesée (7) se vide lorsque la perte de charge ($\Delta P$) dans la conduite est maintenue constante en agissant sur la vitesse de rotation de la vis du convoyeur à vis (8).

FIG. 1

Régulation
Vitesse $V_1$

Régulation
Vitesse $V_2$

$Q_C$

FIG. 2

```
                                    ┌──────────────────┐
                                    │  Initialisation  │
                                    └──────────────────┘
                                             │          ╲21
         Q_C                                 ▼
          ╲                          ┌──────────────────┐
           ─────────────────────────│ Calcul Perte de  │◄──────────
                                     │     Charge       │◄────────
                                     │ ΔP_C = aQ_C + bT │
                                     └──────────────────┘
                                             │        ╲22
         V₂                                  ▼
  ┌──────────────────────────────── ┌──────────────────┐
  │                                  │ Régulation de la │
  │                 ┌──────────────► │ Vitesse V₂ pour  │
  │                 │                │ que ΔP = ΔP_C    │
  │                 │                └──────────────────┘
  │                 │                       ╲23
  ▼                 │          ΔP                          T
┌──────────────┐   │    ┌──────────────┐         ┌──────────────┐
│Calcul Débit  │   │    │Mesure Perte  │         │   Mesure     │
│Volumique     │   │    │de Charge ΔP  │         │ Température T │
│Q_V = f(V₂)   │   │    └──────────────┘         └──────────────┘
└──────────────┘   │         ╲24              T       ╲26
       ╲25         │          │                │
        │          │          ▼                ▼
        ▼          │    ┌──────────────┐
┌──────────────┐   │    │Calcul Débit  │◄──────────────
│Calcul Débit  │   │    │Massique      │◄────────────
│Massique      │   │    │Q₁ = (ΔP-bT)/a│
│Q₂ = ρQ_V     │   │    └──────────────┘
└──────────────┘   │         ╲27
       ╲28         │          │
        │          │          │
        ▼          ▼          ▼
      ┌─────────────────────┐
      │Calcul Dérive par    │
      │Comparaison de       │
      │Q₁ et Q₂             │
      └─────────────────────┘
              ╲29
               │
    30         ▼
     ╲  ╱───────────────╲    Non   ┌──────────────┐
      ╱ Dérive > Seuil ? ╲────────►│ Affichage Q₁ │
      ╲                  ╱         └──────────────┘
       ╲────────────────╱               ╲31
               │ Oui
  Poids        │                T
    │          ▼
  ┌──────────────────────┐
  │     Calibration      │◄─────
  └──────────────────────┘
    ρ        ╲32        a
```

7

# EP 1 156 307 A1

**Office européen des brevets**

## RAPPORT DE RECHERCHE EUROPEENNE

Numéro de la demande

EP 00 40 1340

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 4 490 077 A (SHIMADA KATSUHIKO ET AL) 25 décembre 1984 (1984-12-25) | 1,6 | G01F25/00 G01F1/74 |
| A | * colonne 5, ligne 6 - colonne 6, ligne 40; figures 1,2 *<br>--- | 2-5,7,8 | G01F1/88 F23K3/02 |
| A | US 4 838 738 A (SALTER JAMES A ET AL) 13 juin 1989 (1989-06-13) * colonne 4, ligne 29 - colonne 6, ligne 5; figure 1 *<br>--- | 1,6 | |
| A | EP 0 454 230 A (SHELL INT RESEARCH) 30 octobre 1991 (1991-10-30) * page 2, ligne 43 - page 3, ligne 1 *<br>----- | 1,6 | |

**DOMAINES TECHNIQUES RECHERCHES (Int.Cl.7)**

G01F
F23K

Le présent rapport a été établi pour toutes les revendications

| Lieu de la recherche | Date d'achèvement de la recherche | Examinateur |
|---|---|---|
| LA HAYE | 19 octobre 2000 | Boerrigter, H |

CATEGORIE DES DOCUMENTS CITES

X : particulièrement pertinent à lui seul
Y : particulièrement pertinent en combinaison avec un autre document de la même catégorie
A : arrière–plan technologique
O : divulgation non–écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

8

## ANNEXE AU RAPPORT DE RECHERCHE EUROPEENNE
## RELATIF A LA DEMANDE DE BREVET EUROPEEN NO.

EP 00 40 1340

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-10-2000

| Document brevet cité au rapport de recherche | | Date de publication | Membre(s) de la famille de brevet(s) | | Date de publication |
|---|---|---|---|---|---|
| US 4490077 | A | 25-12-1984 | JP | 58063827 A | 15-04-1983 |
| | | | JP | 58077622 A | 11-05-1983 |
| | | | DE | 3227875 A | 28-04-1983 |
| US 4838738 | A | 13-06-1989 | AUCUN | | |
| EP 0454230 | A | 30-10-1991 | US | 5132917 A | 21-07-1992 |
| | | | CA | 2040944 A | 24-10-1991 |
| | | | DE | 69117210 D | 28-03-1996 |
| | | | DE | 69117210 T | 25-07-1996 |
| | | | ES | 2084087 T | 01-05-1996 |
| | | | JP | 3023516 B | 21-03-2000 |
| | | | JP | 4230809 A | 19-08-1992 |

EPO FORM P0460

Pour tout renseignement concernant cette annexe : voir Journal Officiel de l'Office européen des brevets, No.12/82